# FASCICULE DE BREVET EUROPEEN

(11) **EP 3 395 630 B1**
(45) Date de publication et mention de la délivrance du brevet: **21.10.2020**
(21) Numéro de dépôt: 18168303.8
(22) Date de dépôt: 19.04.2018
(51) Int. Cl.: B60S 1/40, B60S 1/38

(54) **ADAPTATEUR CONSTITUTIF D'UN SYSTEME D'ESSUYAGE**
INTEGRIERTER ADAPTER FÜR REINIGUNGSSYSTEM
ADAPTOR FOR WIPING SYSTEM

(30) Priorité: 28.04.2017 FR 1753797
(43) Date de publication de la demande: 31.10.2018
(73) Titulaire: Valeo Systèmes d'Essuyage, 78322 Le Mesnil Saint Denis (FR)
(72) Inventeur: HOUSSAT, Stéphane, 63500 ISSOIRE (FR); MOULEYRE, Guillaume, 63500 ISSOIRE (FR); GAUCHER, Vincent, 63500 ISSOIRE (FR)
(74) Mandataire: Valeo Vision

(56) Documents cités:
- EP-A1- 3 112 227
- WO-A1-2016/000778
- DE-A1- 10 347 637
- FR-A1- 2 782 043
- FR-A1- 3 040 946
- US-A- 5 168 597

## Description

La présente invention se rapporte aux systèmes d'essuyage pour véhicule automobile. Elle a pour objet un adaptateur qui est constitutif d'un tel système d'essuyage.

Un système d'essuyage, couramment dénommé essuie-glaces, pour véhicule automobile est conçu pour retirer, par balayage, les liquides et salissures qui peuvent perturber la vision qu'un conducteur du véhicule automobile a de son environnement. Ces essuie-glaces comprennent généralement un bras d'entraînement qui effectue un mouvement de va-et-vient angulaire autour d'un axe de rotation, et un balai d'essuyage allongé équipé d'une lame racleuse réalisée en un matériau élastique. En frottant contre une surface vitrée, avant ou arrière, du véhicule automobile, la lame racleuse en balaie l'eau et un certain nombre de salissures, et les évacue en dehors du champ de vision du conducteur.

Quelle que soit la configuration du balai d'essuyage, c'est-à-dire soit un balai d'essuyage comportant des étriers articulés qui retiennent la lame racleuse en plusieurs zones distinctes, soit un balai d'essuyage comportant au moins un support flexible qui maintient la lame racleuse sur toute sa longueur, autrement appelé « balai plat », le balai d'essuyage est rattaché à une partie terminale du bras d'entraînement par l'intermédiaire d'un dispositif de connexion qui comprend un connecteur monté solidaire du balai d'essuyage.

A chacune des extrémités longitudinales du balai d'essuyage dans sa variante « balai plat », la lame racleuse et le support flexible sont équipés d'un embout d'extrémité qui participe d'un maintien de la lame racleuse et du support flexible entre eux.

L'état de la technique comprend le document US2013/0239356A1 qui décrit un dispositif de fixation comprenant le connecteur porteur du balai d'essuyage, et un adaptateur de raccordement du connecteur à la partie terminale du bras d'entraînement.

L'état de la technique comprend aussi le document FR 3 040 946 A1 qui montre un adaptateur selon le préambule de la revendication 1.

Un problème général posé dans le domaine réside dans une nécessité de disposer d'un dispositif de connexion robuste. En effet, en raison du mouvement de va-et-vient angulaire donné au bras d'entraînement, le balai d'essuyage subit une force centrifuge qui génère des contraintes importantes sur des éléments constitutifs du balai d'essuyage. En particulier, l'adaptateur est soumis à des contraintes qui s'exercent sur un moyen de verrouillage que comprend l'adaptateur. En cas de rupture du moyen de verrouillage, le balai d'essuyage risque de se désolidariser du bras d'entraînement, ce qui est préjudiciable, voire dangereux.

Un but de la présente invention est de proposer un adaptateur qui est agencé pour éviter une désolidarisation du bras d'entraînement et du balai d'essuyage.

Un autre but de la présente invention est de proposer un dispositif de connexion qui est agencé pour résister à une contrainte longitudinale importante exercée sur le dispositif de connexion, et notamment sur l'adaptateur.

Un adaptateur de la présente invention est tel que défini dans la revendication 1.

L'adaptateur comprend avantageusement l'une quelconque au moins des caractéristiques suivantes, prise seule ou en combinaison :
- le moyen de verrouillage comprend une plaque au bout de laquelle est ménagé un plot de verrouillage configuré pour se loger dans une fenêtre de la partie terminale, l'excroissance étant issue du plot de verrouillage,
- le plot émerge de la plaque et présente une section horizontale sensiblement rectangulaire ou carré,
- le moyen de basculement peut par exemple être formé par la plaque, qui devient alors une languette flexible,
- alternativement ou de manière complémentaire, le moyen de basculement peut être formé par une charnière placée à l'intersection entre la plaque et une partie intermédiaire de l'adaptateur,
- selon un aspect de l'invention, le plot de verrouillage comprend une paroi avant, une paroi arrière et deux parois de côté reliant la paroi avant à la paroi arrière, l'excroissance prolongeant la paroi arrière dans le volume. Avant et arrière s'analysent le long d'une direction d'extension principale de l'adaptateur, dite direction longitudinale de l'adaptateur,
- le plot de verrouillage comprend un rebord transversal, autrement appelé bec, qui émerge de la paroi avant, la plaque et le rebord transversal délimitant une zone configurée pour recevoir un bord qui délimite la fenêtre. Bord transversal et plaque du moyen de verrouillage prennent ainsi en sandwich une épaisseur de la paroi constitutive de la portion terminale du bras d'entraînement,
- le volume s'étend sur une hauteur et l'excroissance est intégralement contenue à l'intérieur du volume,
- la portion est une ceinture périphérique qui entoure le moyen de verrouillage. On comprend ici que la ceinture entoure notamment le plot de verrouillage au moins dans un plan parallèle, ou sensiblement parallèle, à un plan dans lequel s'inscrit majoritairement la plaque,
- la ceinture périphérique comprend une paroi transversale portée par deux parois longitudinales qui délimitent le volume, les parois longitudinales étant issues de la partie intermédiaire. Le volume est également délimité par la partie intermédiaire de l'adaptateur,
- la paroi transversale est configurée pour former une butée à l'égard de l'excroissance en cas de rupture du moyen de verrouillage ou du moyen de basculement, par exemple la plaque ou la charnière.

L'adaptateur de la présente invention est particulièrement approprié pour un marché d'après-vente du balai d'essuyage.

La présente invention vise à proposer un adaptateur qui est agencé pour assurer une fonction de maintien du balai d'essuyage sur la partie terminale du bras d'entraînement, y compris lorsque des contraintes longitudinales conduisent à casser le moyen de verrouillage, et notamment le plot de verrouillage de ce moyen. D'une manière plus générale, la présente invention vise à proposer un adaptateur, qui sécurise de manière efficace la liaison mécanique entre la partie terminale du bras d'entraînement et le connecteur équipant le balai d'essuyage. Ces buts sont atteints à partir de l'adaptateur décrit dans le présent document.

La présente invention porte aussi sur un dispositif de connexion formé d'un connecteur et d'un tel adaptateur, disposé dans un même contenant, séparés l'une de l'autre ou assemblé l'un à l'autre.

La présente invention porte aussi sur un balai d'essuyage comprenant une lame d'essuyage et un support flexible qui maintient la lame racleuse sur sa longueur, et au moins un adaptateur tel qu'exposé dans le présent document ou un dispositif de connexion comme présenté ci-dessus, le balai d'essuyage étant équipé d'un tel dispositif de connexion. L'objet couvert ici est par exemple un contenant qui reçoit balai d'essuyage plat et un adaptateur tel que détaillé dans le document, séparé ou assemblé sur le balai d'essuyage, et destiné au circuit d'après-vente automobile, autrement appelé seconde monte.

La présente invention porte enfin sur un système d'essuyage comprenant un bras d'entraînement pourvue d'une partie terminale, un connecteur solidaire d'un balai d'essuyage et un adaptateur tel que décrit dans le présent document et reliant le connecteur à la partie terminale du bras d'entraînement.

D'autres caractéristiques, détails et avantages de l'invention ressortiront plus clairement à la lecture de la description donnée ci-après à titre indicatif en relation avec des dessins dans lesquels :
- la figure 1 est une vue en perspective d'un système d'essuyage selon la présente invention,
- la figure 2 est une vue de côté d'un adaptateur selon la présente invention constitutif du système d'essuyage illustré sur la figure 1,
- la figure 3 est une vue de dessus de l'adaptateur illustré sur la figure 2,
- la figure 4 est une vue partielle d'une coupe longitudinale de l'adaptateur illustré sur les figures 2 ou 3,
- la figure 5 est une vue partielle d'une coupe longitudinale de l'adaptateur illustré sur les figures 2 à 4 équipé d'une partie terminale d'un bras d'entrainement,
- la figure 6 est une vue partielle d'une coupe longitudinale de l'adaptateur et de la partie terminale illustrés sur la figure 5 après rupture d'une zone de l'adaptateur,
- la figure 7 est une vue partielle en perspective du système d'essuyage illustré sur la figure 1.

Il faut tout d'abord noter que les figures exposent l'invention de manière détaillée pour mettre en œuvre l'invention, lesdites figures pouvant bien entendu servir à mieux définir l'invention le cas échéant.

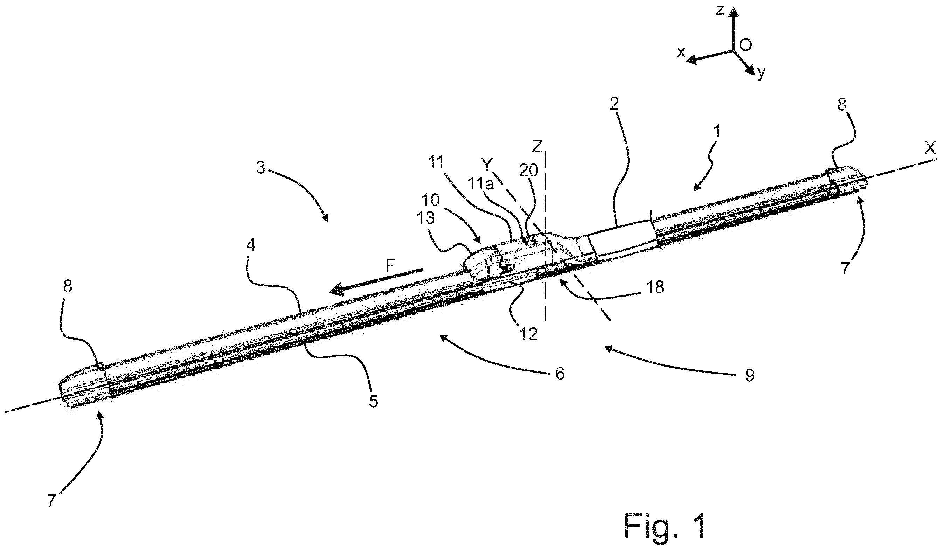

Sur les figures, les dénominations longitudinale, transversale, verticale, latérale, gauche, droite, supérieure, inférieure, se réfèrent à l'orientation, dans un repère orthonormé Oxyz, d'un balai d'essuyage 1 illustré sur la figure 1. Dans ce repère, l'axe Ox représente la direction longitudinale, l'axe Oy représente la direction transversale, et l'axe Oz représente la direction verticale de l'objet considéré, notamment l'adaptateur ou le balai d'essuyage. Dans ce repère, un plan longitudinal vertical est parallèle au plan Oxz, un plan transversal vertical est parallèle au plan Oyz et un plan longitudinal horizontal est parallèle à un plan Oxy.

Sur la figure 1, un balai d'essuyage 1 de la présente invention s'étend selon un axe longitudinal X, parallèle à l'axe Ox. Les dénominations gauche et droite s'apprécient par rapport à une position le long d'un axe transversal Y, parallèle à l'axe Oy, de part et d'autre de l'axe longitudinal X. Un axe vertical Z symbolise une direction verticale, parallèle à celle de l'axe Oz, qui est perpendiculaire aux directions longitudinale et transversale décrites ci-dessus. Les dénominations supérieure ou inférieure se rapportent à des orientations le long de l'axe vertical Z, la dénomination inférieure contenant le plan du pare-brise. Pour les directions longitudinales, les dénominations extérieure ou intérieure s'apprécient par rapport à un point de pivotement du balai d'essuyage 1 sur un bras d'entraînement 2 du balai d'essuyage 1, la dénomination intérieure correspondant à la partie où le bras d'entraînement 2 et un demi-balai s'étendent, la dénomination extérieure correspondant à la partie où l'autre demi-balai s'étend.

Un véhicule automobile est couramment équipé d'un système d'essuyage 3 pour évacuer une eau et/ou des salissures présentes sur une surface vitrée, notamment une lunette arrière ou un pare-brise avant de véhicule automobile. Le système d'essuyage 3 comprend le bras d'entraînement 2 qui est apte à effectuer un mouvement de va-et-vient angulaire le long et au-dessus de la surface vitrée à essuyer.

Le système d'essuyage 3 comprend aussi le balai d'essuyage 1 qui s'étend selon l'axe longitudinal X. Le balai d'essuyage 1 comprend une lame racleuse 5 et au moins un déflecteur d'air 4. Le déflecteur d'air 4 est prévu pour transformer une pression appliquée par un flux d'air circulant le long de la surface vitrée en une force d'appui du balai d'essuyage 1 contre la surface vitrée du véhicule automobile.

La lame racleuse 5 est la pièce du balai d'essuyage 1 en contact direct avec la surface vitrée pour évacuer l'eau et/ou les salissures présentes sur cette dernière. La lame racleuse 5 est par exemple une lame souple réalisée en un matériau élastique, tel qu'un polymère, ou un caoutchouc notamment. Le balai d'essuyage 1 comprend aussi un support flexible 6 qui confère au balai d'essuyage 1 une certaine déformation dans le plan Oxz, de manière à répartir la force d'appui du bras d'entraînement 2 le long du balai d'essuyage 1 et à suivre ainsi un galbe de la surface vitrée.

Le balai d'essuyage 1 comprend également à chacune de ses extrémités longitudinales 7 un embout d'extrémité 8. Chaque embout d'extrémité 8 est prévu pour maintenir ensemble la lame racleuse 5 et le support flexible 6, un tel embout d'extrémité 8 pouvant par exemple couvrir une partie terminale du déflecteur d'air 4. Le support flexible 6 s'étend donc d'une première extrémité longitudinale 7 du balai d'essuyage 1 à une deuxième extrémité longitudinale 7 du même balai.

Selon l'exemple de réalisation, le support flexible 6 est par exemple une bande métallique, autrement appelé vertèbre. Une telle vertèbre est avantageusement unique, au moins vue dans le plan Oxy.

Au moins le déflecteur d'air 4, la lame racleuse 5 et le support flexible 6 forment une structure semi-rigide 9 qui est portée par un dispositif de connexion 10, interposé entre une partie terminale 11 du bras d'entraînement 2 et la structure semi-rigide 9. Un tel dispositif de connexion 10 comprend par exemple un connecteur 12 solidaire au moins de manière isostatique de la structure semi-rigide 9, et un adaptateur 13 relié par une liaison pivot au connecteur 12.

La partie terminale 11 du bras d'entraînement 2 présente une section transversale en forme de « U », avec une paroi supérieure et deux branches, les deux branches de ce « U » se terminant de manière droite. Une telle partie terminale ne comprend donc pas de bord replié qui tend à former un « C » avec la paroi supérieure et avec la branche concernée.

Le dispositif de connexion 10 assure une liaison mécanique entre la partie terminale 11 du bras d'entraînement 2 et le balai d'essuyage 1 et permet ainsi de séparer le balai d'essuyage 1 du bras d'entraînement 2, par exemple en vue d'un remplacement du balai d'essuyage 1. Dans sa généralité, le dispositif de connexion 10 de la présente invention comprend de préférence en tout et pour tout deux pièces, le connecteur 12 et l'adaptateur 13.

Pour permettre une solidarisation et une désolidarisation de l'adaptateur 13 par rapport à la partie terminale 11 du bras d'entraînement 2, l'adaptateur 13 comprend un moyen de verrouillage/déverrouillage, ci-après dénommé moyen de verrouillage 20, qui est mobile entre une position de verrouillage dans laquelle l'adaptateur 13 et la partie terminale 11 sont solidaires l'un de l'autre et une position de déverrouillage dans laquelle l'adaptateur 13 et la partie terminale 11 peuvent être séparés l'un de l'autre. Plus particulièrement, en position de verrouillage, un plot de verrouillage 20 que comprend le bouton de déverrouillage 18 est engagé à l'intérieur d'une fenêtre 11a qui équipe la partie terminale 11, notamment la paroi supérieure de la partie terminale 11. En position de déverrouillage, le plot de verrouillage 20 est désengagé de la fenêtre 11a en étant placé à l'extérieure de celle-ci.

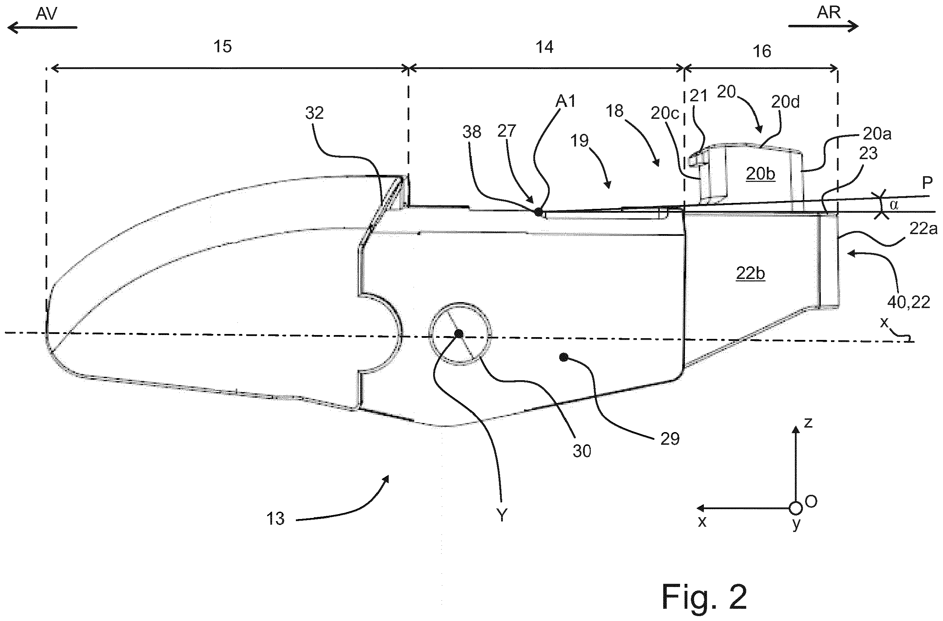

Sur les figures 2 à 4, l'adaptateur 13 comprend une partie intermédiaire 14 qui est interposée entre une partie avant 15 et une partie arrière 16. Autrement dit, de l'avant AV de l'adaptateur 13 vers l'arrière AR de l'adaptateur 13, se succèdent le long de l'axe longitudinal X, la partie avant 15, puis la partie intermédiaire 14, puis la partie arrière 16. Selon une coupe transversale réalisée dans un plan parallèle au plan Oyz, l'adaptateur 13 présente une section en forme de « U » qui permet de loger le connecteur.

La partie intermédiaire 14 est équipée d'un point de basculement 17 du moyen de verrouillage 18, pour permettre une mobilité du moyen de verrouillage 18 entre la position de verrouillage et la position de déverrouillage dans le plan Oxz. Ce point de basculement 17 comprend un axe d'articulation A1 parallèle à l'axe transversal Y, tandis que le moyen de verrouillage 18 s'étend selon l'axe longitudinal X. Le moyen de verrouillage 18 est donc mobile en bascule dans un plan parallèle au plan Oxz orthogonal à l'axe d'articulation Al. Le point de basculement 17 forme l'unique liaison entre le moyen de verrouillage 18 et la partie intermédiaire 14.

Le moyen de verrouillage 18 comprend par ailleurs une plaque 19 qui est pourvue du plot de verrouillage 20, notamment en étant positionné à une extrémité longitudinale de la plaque 19. La plaque 19 est interposée longitudinalement entre le point de basculement 17 et le plot de verrouillage 20. Autrement dit, le point de basculement 17 et le plot de verrouillage 20 sont longitudinalement opposés l'un à l'autre par rapport à la plaque 19.

La plaque 19 est par exemple étendue à l'intérieur d'un plan parallèle au plan Oxy. Selon une autre forme de réalisation illustrée sur la figure 2, la plaque 19 est étendue selon un plan de plaque P qui forme un angle α avec un plan parallèle au plan Oxy, l'angle α étant compris entre 0° et 10°.

Le basculement du moyen de verrouillage 20 est obtenu par un mayen de basculement 27. Ce dernier peut prendre différentes formes mais on en donnera deux ci-après à titre d'exemple. Ce moyen de basculement 27 peut ainsi être obtenu selon au moins deux moyens distincts ou complémentaires : par déformation de la plaque 19, qui devient alors une languette flexible, et/ou par un charnière 38 disposée au niveau de l'axe d'articulation Al du point de basculement 17.

La flexibilité de la languette flexible est obtenue par la matière constitutive de cette dernière, ou par une conformation adaptée de celle-ci. La charnière 38 est quant à elle réalisée par la souplesse de la matière constitutive de l'adaptateur 13. Selon une variante, la charnière est par exemple formée d'un amincissement de matière dans un plan transversal parallèle au plan Oyz.

Le plot de verrouillage 20 est longitudinalement ménagé à l'opposé du point de basculement 17 et émerge au-dessus de la plaque 19. Le plot de verrouillage 20 présente une section, prise selon un plan parallèle au plan Oxy, qui est notamment rectangulaire ou carrée. Le plot de verrouillage 20 comprend une paroi arrière 20a, deux parois de côté 20b et une paroi avant 20c. La paroi arrière 20a et la paroi avant 20c sont par exemple parallèles l'une avec l'autre et parallèles au plan Oyz. Les parois de côté 20b, au nombre de deux, sont par exemple parallèles l'une avec l'autre et parallèles au plan Oxz. La paroi avant 20c est la paroi du plot de verrouillage 20 qui relie ce dernier à la plaque 19. La paroi arrière 20a est la paroi du plot de verrouillage 20 qui est la plus éloignée du point de basculement 17.

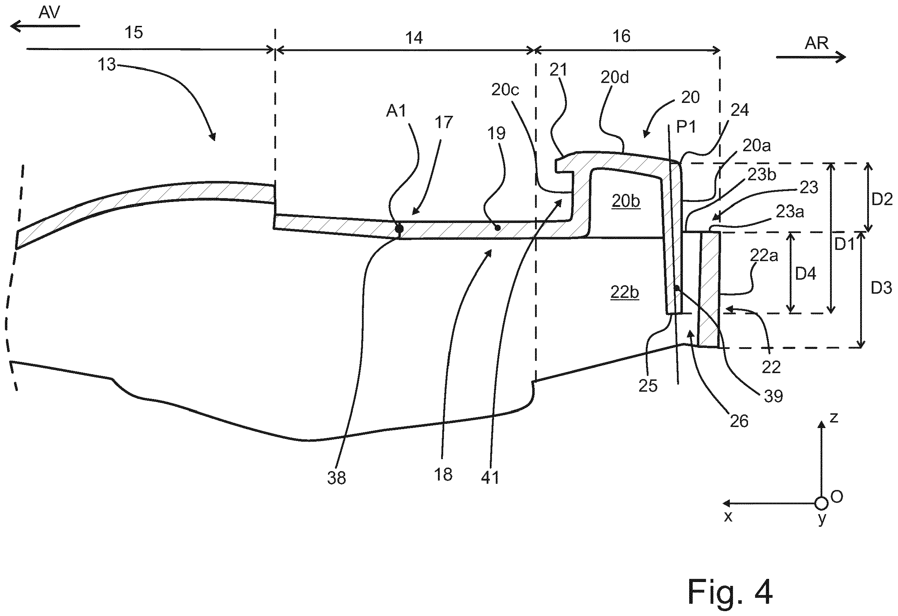

Tel qu'illustré sur la figure 4, la paroi arrière 20a du plot de verrouillage 20 s'étend dans un premier plan P1 entre une extrémité supérieure 24 et une extrémité inférieure 25. Les parois de côté 20b relient entre elles la paroi arrière 20a et la paroi avant 20c. La paroi avant 20c, les parois de côtés 20b et la paroi arrière 20a sont reliées entre elles par une paroi supérieure 20d qui forme une surface d'appui pour un utilisateur qui souhaite déverrouiller le moyen de verrouillage 18, et de ce fait désengager le plot de verrouillage 20 de la fenêtre 11a.

Selon l'invention, le moyen de verrouillage 20 comprend une excroissance 39. Une telle excroissance forme un moyen qui participe à la fonction qui vise à empêcher que le plot de verrouillage ne sorte de la fenêtre 11. L'excroissance 39 émerge de la paroi arrière 20a du plot de verrouillage 20 et s'étend dans le plan P1 au-delà des parois avant 20c et de côté 20b. Selon un exemple de réalisation, cette excroissance 39 prend la forme d'un muret ménagé dans le prolongement de la paroi arrière 20a du plot de verrouillage 20.

Le plot de verrouillage 20 comprend un rebord transversal 21 qui est parallèle à l'axe transversal Y et qui s'étend au-dessus de la plaque 19. Le rebord transversal 21 émerge longitudinalement de la paroi avant 20c du plot de verrouillage 20. Le rebord transversal 21 est ménagé en vis-à-vis du point de basculement 17 et constitue une avancée du plot de verrouillage 20 en direction de ce point de basculement 17. Autrement dit, le rebord transversal 21 forme un bec qui surplombe la plaque 19. Autrement dit encore, le rebord transversal 21 forme une protubérance du plot de verrouillage 20 vers l'avant AV de l'adaptateur 13.

Les figures 2 à 4 montrent aussi que la partie arrière 16 de l'adaptateur 13 contient le plot de verrouillage 20 et une portion 40 qui délimite au moins partiellement un volume 26 de l'adaptateur 13. La portion 40 est toute forme de l'adaptateur ménagé au voisinage du plot de verrouillage et avec laquelle l'excroissance 39 peut interférer quand le moyen de basculement 27 ou le moyen de verrouillage 18 rompt.

Selon un exemple de réalisation, la portion 40 prend la forme d'une ceinture périphérique 22. La ceinture périphérique 22 comprend une paroi transversale 22a qui est reliée par deux parois longitudinales 22b à la partie intermédiaire 14. La paroi transversale 22a est préférentiellement ménagée selon un plan parallèle au plan Oyz. Les parois longitudinales 22b sont préférentiellement ménagées selon un plan parallèle au plan Oxz. Autrement dit, la ceinture périphérique 22 est globalement agencée en « U » dont la base est formée par la paroi transversale 22a et dont les branches sont formées par les parois longitudinales 22b. Il en résulte que la ceinture périphérique 22 délimite une enceinte à l'intérieur de laquelle le plot de verrouillage 20, l'excroissance 39 et au moins partiellement la plaque 19 sont susceptibles de circuler lors d'un mouvement de bascule du moyen de verrouillage 18 autour de l'axe d'articulation A1. Autrement dit, la ceinture périphérique 22 délimite le volume 26 qui est bordé sur trois côtés par la ceinture périphérique 22 et sur le dernier côté par la partie intermédiaire 14.

Selon une première approche de la présente invention, l'extrémité inférieure 25 de l'excroissance 39 du plot de verrouillage 20 est disposée à l'intérieur du volume 26. Autrement dit, l'excroissance 39 portée par le plot de verrouillage 20 s'étend au moins partiellement à l'intérieur du volume 26. Autrement dit encore, le volume interne 26 loge l'extrémité inférieure 25 de la paroi arrière 20a, et une partie de l'excroissance 39.

Selon une deuxième approche de la présente invention, la portion 40 comprend un rebord supérieur 23 qui est conformé en « U », selon une coupe réalisée dans un plan parallèle au plan Oxy. Le rebord supérieur 23 comprend notamment un rebord supérieur arrière 23a et des rebords supérieurs longitudinaux 23b qui relient le rebord supérieur arrière 23a à la partie intermédiaire 14. Selon cette approche de l'invention lisible sur la figure 4, une première distance D1 mesurée dans le premier plan P1 entre l'extrémité supérieure 24 de la paroi arrière 20a et l'extrémité inférieure 25 de l'excroissance 39 est supérieure à une deuxième distance D2 prise dans le premier plan P1 entre l'extrémité supérieure 24 de la paroi arrière 20a et une projection orthogonale du rebord supérieur arrière 23a sur le premier plan P1, réalisée parallèlement au plan Oyx.

La figure 4 montre également que la portion 40 s'étend sur une hauteur D3, tandis qu'une hauteur D4 de l'excroissance 39 mesurée dans le plan P1 est inférieure à la distance D3. On comprend ici que l'excroissance 39 est intégralement contenue dans la hauteur de la portion 40. Alternativement, la hauteur D4 pourrait être supérieure à la hauteur D3, l'extrémité inférieure 25 étant alors située à l'extérieure du volume 26.

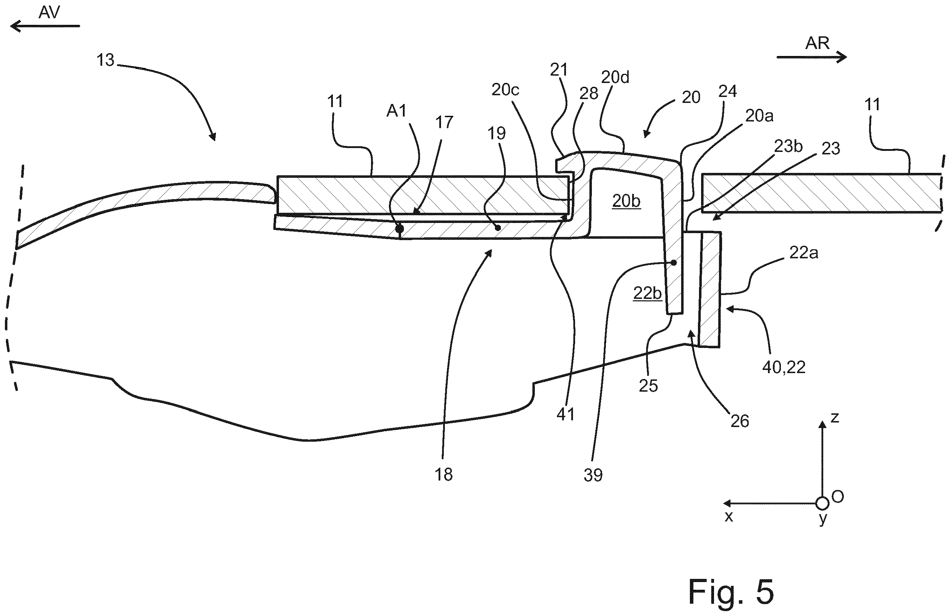

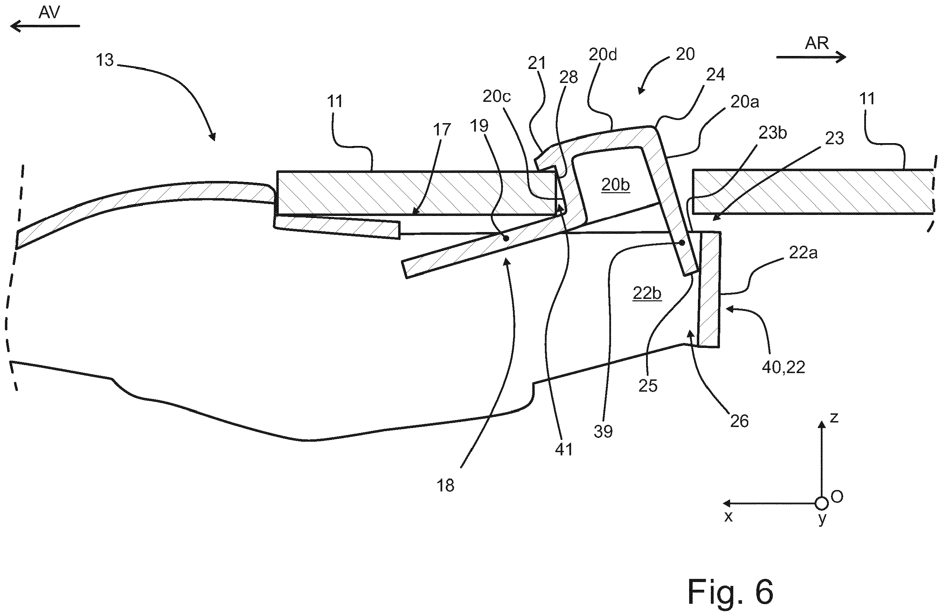

Selon les dispositions de la présente invention, en cas d'une rupture du moyen de verrouillage 18, et notamment de la plaque 19 du moyen de verrouillage 18, ou bien de la charnière 38, l'excroissance 39, notamment son extrémité inférieure 25, vient en butée contre la portion 40, par exemple contre la paroi transversale 22a de la ceinture périphérique 22. Autrement dit, lors d'une telle rupture, le moyen de verrouillage 18 passe d'une première position illustrée sur la figure 5 à une deuxième position illustrée sur la figure 6.

Tel que représenté sur la figure 6, en cas de casse de la plaque 19 et/ou de la charnière 38, la paroi transversale 22a forme un moyen de retenue de l'excroissance 39 pour éviter une échappée longitudinale du plot de verrouillage 20 hors de la fenêtre 11a de la partie terminale 11 du bras d'entraînement. Il en résulte finalement, qu'y compris en cas de brisure de la plaque 19 et/ou de la charnière 38, l'adaptateur 13 reste solidaire de la partie terminale 11. Il en découle finalement un maintien mécanique du balai d'essuyage 1 sur le bras d'entraînement 2, ce qui permet d'éviter toute projection du balai d'essuyage 1 en cas d'utilisation du système d'essuyage 3 alors que l'adaptateur 13 est endommagé.

On note aussi sur la figure 6 que le rebord transversal 21 et la plaque 19 délimitent une zone 41 dans laquelle une bordure avant 28 qui délimite la fenêtre 11a s'étend. Une telle disposition conforte le blocage du plot de verrouillage 20 à l'intérieur de la fenêtre 11a et évite une désolidarisation intempestive de l'adaptateur 13 d'avec la partie terminale 11. Le plot de verrouillage 20 est ainsi arc-bouté entre un appui du rebord transversal 21 contre une face supérieure de la partie terminale 11 et un appui de l'excroissance 39, notamment son extrémité inférieure 25, contre une face interne de la portion 40.

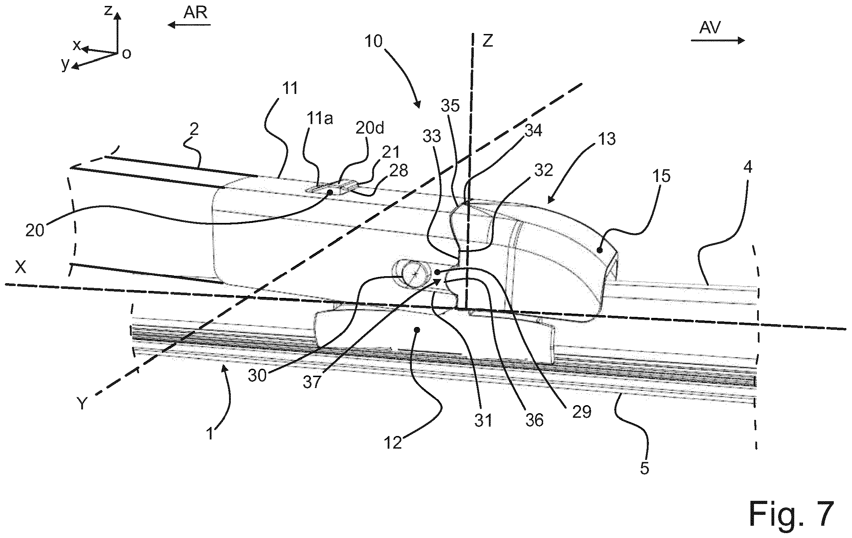

Sur la figure 7, le connecteur 12 est apte à porter le balai d'essuyage 1 et est monté en rotation sur l'adaptateur 13. Selon un mode de réalisation de l'invention, l'adaptateur 13 et le connecteur 12 sont réalisés par moulage d'un matériau synthétique, par exemple un matériau de la famille des Polyoxyméthylènes, connue sous l'acronyme POM, ou par moulage d'un mélange de matériaux polymères, par exemple un mélange de polymères de la famille des polycarbonates et de la famille des Acrylonitrile Butadiène Styrène, connue sous l'acronyme ABS. Un tel mode de réalisation facilite une mise en forme de la charnière 38 notamment.

L'adaptateur 13 d'une part et le connecteur 12 d'autre part sont de préférence chacun d'un seul tenant. Autrement dit, l'adaptateur 13 d'une part et le connecteur 12 d'autre part sont monoblocs et ne peuvent être scindés en plusieurs morceaux qu'à partir d'une destruction de l'adaptateur 13 ou du connecteur 12. La partie terminale 11 est quant à elle par exemple réalisée par pliage d'un feuillard métallique, tel qu'une tôle en acier, en aluminium ou analogue ou bien par moulage d'une matière synthétique.

La partie avant 15 de l'adaptateur 13 est profilée vers l'avant AV de l'adaptateur 13, de telle sorte que la partie avant 15 forme un nez qui prolonge longitudinalement la partie terminale 11, de manière à profiler cette dernière. Selon une coupe transversale réalisée dans un plan parallèle au plan Oyz, la partie avant 15 présente une section en « U ».

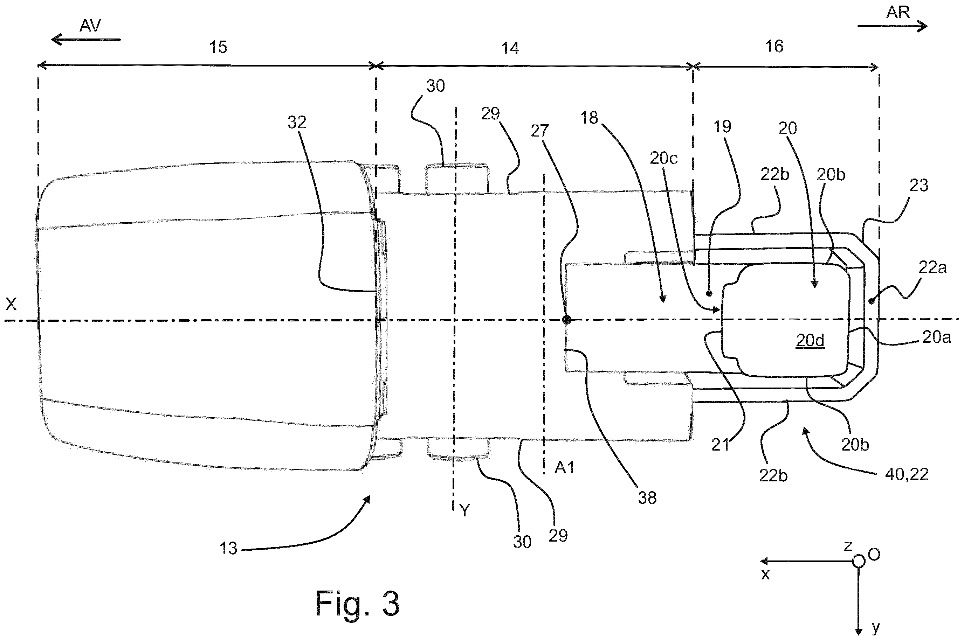

En se reportant également sur les figures 2 et 3, et selon une coupe transversale réalisée dans un plan parallèle au plan Oyz, la partie intermédiaire 14 présente aussi une section en « U ». Ainsi, la partie intermédiaire 14 de l'adaptateur 13 comprend deux parois latérales 29 s'étendant selon un plan parallèle au plan Oxz qui sont chacune pourvues d'un doigt 30 qui émergent de la paroi latérale 29 que le doigt 30 équipe. De préférence, le doigt 30 est conformé en une portion cylindrique d'axe de révolution parallèle à l'axe transversal Y.

Tel que visible sur la figure 7, le doigt 30 est prévu pour venir coulisser à l'intérieur d'une rainure 31 que comporte la partie terminale 11 du bras d'entraînement 2. Le diamètre du doigt 30 est préférentiellement inférieur à une largeur de la rainure 31 prise selon l'axe vertical Z, pour permettre un coulissement aisé du doigt 30 dans la rainure 31.

En se reportant à nouveau aux figures 2 et 3, la partie avant 15 comporte un épaulement 32 qui émerge au-dessus des parois latérales 29 de la partie intermédiaire 14. En d'autres termes, la partie avant 15 est plus large que la partie intermédiaire 14 de l'adaptateur 13. Cette différence de largeur est par exemple égale à deux fois l'épaisseur de la paroi constitutive de la partie terminale 11 du bras d'entraînement 2. L'épaulement 32 constitue une butée à l'encontre d'une arête avant 33 que comporte la partie terminale 11 du bras d'entraînement 2. L'épaulement 32 est conformé équipée d'une avancée 34 qui est notamment une excroissance de la partie avant 15 vers la partie intermédiaire 14 de l'adaptateur 13. L'avancée 34 est destinée à venir en butée à l'intérieur d'un renfoncement 35 de la partie terminale 11, le renfoncement 35 étant ménagé vers l'arrière AR de la partie terminale 11.

L'épaulement 32 comporte au moins un organe d'emboîtement 36 qui est de conformation complémentaire à une entrée de la rainure 31 de la partie terminale 11 du bras d'entraînement 2. L'organe d'emboîtement 36 et la rainure 31 coopèrent ensemble pour faciliter une mise en contact et une mise en butée de l'épaulement 32 avec l'arête avant 33.

Selon la forme de réalisation illustrée, les organes d'emboîtement 36 sont au nombre de deux et prolongent la partie avant 15 en empiétant sur la partie intermédiaire 14. L'organe d'emboîtement 36 émerge ainsi de l'épaulement 32 et s'étend vers l'arrière AR de l'adaptateur 13 en étant porté par la paroi latérale 29 de la partie intermédiaire 14. Alternativement, l'organe d'emboîtement 36 peut être unique sur l'adaptateur 13.

Chaque organe d'emboîtement 36 est par exemple conformé en un renflement demi-circulaire pour coopérer avec un débouché 37 de la rainure 31. L'organe d'emboîtement 36 et le débouché 37 de la rainure 31 évitent ensemble un déplacement vertical de l'adaptateur 13 par rapport à la partie terminale 11 du bras d'entraînement 2, en position d'utilisation de l'adaptateur 13. Le ou les organes d'emboîtement 36 sont avantageusement des moyens de blocage vertical de l'adaptateur 13 dans la partie terminale 11 du bras d'entraînement 2.

L'ensemble de ces dispositions sont telles que lors d'une rupture du moyen de verrouillage 18 et/ou du moyen de basculement 27, le plot de verrouillage 20 demeure à l'intérieur de la fenêtre 11a de la partie terminale et qu'en conséquence l'adaptateur 13 demeure fixé au bras d'entraînement, sans pouvoir s'en désolidariser longitudinalement, transversalement et verticalement.

## Revendications

1. Adaptateur (13) destiné à relier un balai d'essuyage (1) à un bras d'entraînement (2) d'un système d'essuyage (3) pour véhicule, l'adaptateur (13) étant équipé d'au moins un moyen de verrouillage (18) comprenant une plaque (19) au bout de laquelle est ménagé un plot de verrouillage (20) configuré pour se loger dans une fenêtre (11a) d'une partie terminale (11) du bras d'entraînement (2), l'adaptateur (13) comprenant un moyen de basculement (27) du moyen de verrouillage (18), l'adaptateur (13) comprenant une portion (40) délimitant au moins partiellement un volume (26) de l'adaptateur (13), le plot de verrouillage (20) comprenant une paroi avant (20c), une paroi arrière (20a) et deux parois de côté (20b) reliant la paroi avant (20c) à la paroi arrière (20a), le plot de verrouillage (20) comprenant une excroissance (39) qui prolonge la paroi arrière (20a) et qui s'étend à l'intérieur du volume (26) de l'adaptateur (13), **caractérisé en ce que** le plot de verrouillage (20) comprend un rebord transversal (21) qui émerge de la paroi avant (20c), et **en ce que** l'adaptateur (13) comprend une partie intermédiaire (14) interposée entre une partie avant (15) et une partie arrière (16) le long d'un axe longitudinal (X) de l'adaptateur (13), la partie arrière (16) comprenant le plot de verrouillage (20) et la portion (40).

2. Adaptateur (13) selon la revendication précédente, dans lequel la plaque (19) et le rebord transversal (21) délimitant une zone (41) configurée pour recevoir un bord (28) qui délimite la fenêtre (11a).

3. Adaptateur (13) selon l'une quelconque des revendications précédentes, dans lequel le volume (26) s'étend sur une hauteur (D3), l'excroissance (39) étant intégralement contenue à l'intérieur du volume (26).

4. Adaptateur (13) selon l'une quelconque des revendications précédentes, dans lequel la portion (40) est une ceinture périphérique (22) qui entoure le moyen de verrouillage (18).

5. Adaptateur (13) selon la revendication précédente, dans lequel la ceinture périphérique (22) comprend une paroi transversale (22a) portée par deux parois longitudinales (22b) qui délimitent le volume (26), les parois longitudinales (22b) étant issues de la partie intermédiaire (14).

6. Adaptateur (13) selon la revendication précédente, dans lequel la paroi transversale (22a) est configurée pour former une butée à l'égard de l'excroissance (39) en cas de rupture du moyen de verrouillage (18) ou du moyen de basculement (27).

7. Dispositif de connexion (10) formé d'un connecteur (12) et d'un adaptateur (13) selon l'une quelconque des revendications précédentes.

8. Balai d'essuyage (1) comprenant au moins une lame d'essuyage (5) et un support flexible (6) qui maintient la lame racleuse (5) sur sa longueur, et au moins un adaptateur (13) selon l'une quelconque des revendications 1 à 6 ou un dispositif de connexion (10) selon la revendication 7.

## Patentansprüche

1. Adapter (13), welcher dazu bestimmt ist, ein Wischblatt (1) mit einem Antriebarm (2) eines Wischsystems (3) für ein Fahrzeug zu verbinden, wobei der Adapter (13) mit wenigstens einem Verriegelungsmittel (18) ausgestattet ist, das eine Platte (19) umfasst, an deren Ende ein Verriegelungsstück (20) ausgebildet ist, das dafür ausgelegt ist, in einem Fenster (11a) eines Endteils (11) des Antriebsarmes (2) aufgenommen zu werden, wobei der Adapter (13) ein Mittel zum Kippen (27) des Verriegelungsmittels (18) umfasst, wobei der Adapter (13) einen Abschnitt (40) umfasst, der wenigstens teilweise ein Volumen (26) des Adapters (13) begrenzt, wobei das Verriegelungsstück (20) eine vordere Wand (20c), eine hintere Wand (20a) und zwei Seitenwände (20b), welche die vordere Wand (20c) mit der hinteren Wand (20a) verbinden, umfasst, wobei das Verriegelungsstück (20) einen Ansatz (39) umfasst, welcher die hintere Wand (20a) verlängert und welcher sich ins Innere des Volumens (26) des Adapters (13) erstreckt, **dadurch gekennzeichnet, dass** das Verriegelungsstück (20) einen Querflansch (21) umfasst, welcher von der vorderen Wand (20c) aus vorsteht, und dadurch, dass der Adapter (13) einen Zwischenteil (14) umfasst, der zwischen einem vorderen Teil (15) und einem hinteren Teil (16) entlang einer Längsachse (X) des Adapters (13) angeordnet ist, wobei der hintere Teil (16) das Verriegelungsstück (20) und den Abschnitt (40) umfasst.

2. Adapter (13) nach dem vorhergehenden Anspruch, wobei die Platte (19) und der Querflansch (21) einen Bereich (41) begrenzen, der dafür ausgelegt ist, einen Rand (28) aufzunehmen, welcher das Fenster (11a) begrenzt.

3. Adapter (13) nach einem der vorhergehenden Ansprüche, wobei sich das Volumen (26) auf einer Höhe (D3) erstreckt, wobei der Ansatz (39) vollständig im Inneren des Volumens (26) enthalten ist.

4. Adapter (13) nach einem der vorhergehenden Ansprüche, wobei der Abschnitt (40) ein Umfangsgürtel (22) ist, welcher das Verriegelungsmittel (18) umgibt.

5. Adapter (13) nach dem vorhergehenden Anspruch, wobei der Umfangsgürtel (22) eine Querwand (22a) umfasst, die von zwei Längswänden (22b) getragen wird, welche das Volumen (26) begrenzen, wobei die Längswände (22b) an den Zwischenteil (14) angeformt sind.

6. Adapter (13) nach dem vorhergehenden Anspruch, wobei die Querwand (22a) dafür ausgelegt ist, einen Anschlag gegenüber dem Ansatz (39) im Falle eines Bruchs des Verriegelungsmittels (18) oder des Kippmittels (27) zu bilden.

7. Verbindungsvorrichtung (10), die von einem Verbinder (12) und einem Adapter (13) nach einem der vorhergehenden Ansprüche gebildet wird.

8. Wischblatt (1), welches wenigstens einen Wischergummi (5) und eine flexiblen Halter (6), welcher den Wischgummi (5) auf seiner Länge hält, und wenigstens einen Adapter (13) nach einem der Ansprüche 1 bis 6 oder eine Verbindungsvorrichtung (10) nach Anspruch 7 umfasst.

## Claims

1. Adapter (13) designed to connect a wiper blade (1) to a drive arm (2) of a windscreen wiping system (3) for vehicles, the adapter (13) being outfitted with at least one locking means (18) comprising a plate (19) at the end of which is arranged a locking pin (20) designed to fit into a slot (11a) of a terminal portion (11) of the drive arm (2), the adapter (13) comprising a pivoting means (27) of the locking means (18), the adapter (13) comprising a portion (40) at least partially bounding off a volume (26) of the adapter (13), the locking pin (20) comprising a front wall (20c), a rear wall (20a) and two side walls (20b) joining the front wall (20c) to the rear wall (20a), the locking pin (20) comprising an appendage (39) which prolongs the rear wall (20a) and which extends into the inside of the volume (26) of the adapter (13), **characterized in that** the locking pin (20) comprises a transverse flange (21) which emerges from the front wall (20c), and **in that** the adapter (13) comprises an intermediate portion (14) interposed between a front portion (15) and a rear portion (16) along a longitudinal axis (X) of the adapter (13), the rear portion (16) comprising the locking pin (20) and the portion (40).

2. Adapter (13) according to the preceding claim, wherein the plate (19) and the transverse flange (21) bound off a zone (41) designed to receive an edge (28) bounding the slot (11a).

3. Adapter (13) according to any one of the preceding claims, wherein the volume (26) extends along a height (D3), the appendage (39) being integrally contained inside the volume (26).

4. Adapter (13) according to any one of the preceding claims, wherein the portion (40) is a peripheral belt (22) surrounding the locking means (18).

5. Adapter (13) according to the preceding claim, wherein the peripheral belt (22) comprises a transverse wall (22a) supported by two longitudinal walls (22b) which bound off the volume (26), the longitudinal walls (22b) emerging from the intermediate portion (14).

6. Adapter (13) according to the preceding claim, wherein the transverse wall (22a) is designed to form an abutment for the appendage (39) in event of breaking of the locking means (18) or the pivoting means (27).

7. Connection device (10) formed by a connector (12) and an adapter (13) according to any one of the preceding claims.

8. Wiper blade (1) comprising at least one wiper strip (5) and a flexible support (6) which holds the scraper blade (5) along its length, and at least one adapter (13) according to any one of Claims 1 to 6 or a connection device (10) as claimed in Claim 7.
